# EUROPEAN PATENT SPECIFICATION

(11) **EP 1 762 335 B1**
(45) Date of publication and mention of the grant of the patent: **05.11.2008**
(21) Application number: 05425626.8
(22) Date of filing: 07.09.2005
(51) Int. Cl.: B23Q 11/10

(54) **Process for machining with chip removal articles made of fibres where inert materials are bound with resins**
Bearbeitungsverfahren mit Entsorgung von Spänen aus in Harz eingebundenem Fibermaterial
Procédé d'usinage avec enlèvement de copeaux de produits en fibres avec matières inertes liées avec des résines

(43) Date of publication of application: 14.03.2007
(73) Proprietor: Toncelli, Luca, 36061 Bassano del Grappa (Vicenza) (IT)
(72) Inventor: Toncelli, Luca, 36061 Bassano del Grappa (Vicenza) (IT)
(74) Representative: Dragotti, Gianfranco

(56) References cited:
- EP-A- 0 845 318
- WO-A-03/103888
- DE-A1- 19 647 575
- US-A- 4 022 182
- US-B1- 6 450 869
- PATENT ABSTRACTS OF JAPAN vol. 012, no. 091 (M-679), 24 March 1988 (1988-03-24) & JP 62 228375 A (TOSHIBA CORP), 7 October 1987 (1987-10-07)

## Description

The present invention relates to the machining of articles made of composite materials and, more specifically, to a method for such machining.

For many years composite articles, usually in the form of panels, consisting substantially of fibres of inert materials and bonding resins have been produced.

For some particular applications, such as those in the aeronautical, space, motor car and ship building sector, these panels consist of fibres of a particular nature, such as carbon, glass, aramide and other fibres, and these fibres are substantially embedded, in a suitable spatial arrangement, within hardening resins, such as epoxy resins.

The rough-formed panels, which often are large in size, must then undergo machining so as to provide them with their final form for use, said machining operations including cutting, milling, shaping, boring, etc., of the panels. These operations involve removal of material and, therefore, during machining, very fine dust and shavings are produced, these containing resin and minute fragments of fibres embedded therein.

It is obvious that these dust particles give rise to a problem of environmental pollution and in particular result in dangerous conditions for the persons working in the plant.

Except in very special situations, because of the size of the articles to be machined and the machine-tools required for the various machining operations, it is difficult to employ conventional hermetic screening systems which completely enclose the working area, so that initially the only possible solution is that of direct suction of the dust in the proximity of the tool and therefore at the very moment in which it is produced.

However, in this case also, because of the complexity of the final forms to be imparted to the articles and the machines used for the machining operations (frequently five-axis machines with bi-rotational heads are employed), it is difficult to perform an efficient suction in the proximity of the tool, following the movements of the head. Consequently, the suction is never complete and the surrounding environment actually is more or less saturated with dust and suspended particles.

In view of the high degree of abrasiveness of the materials of which the panels are made, another problem associated with the dry machining of these panels and simultaneous suction of the dust and shavings is that of the heat generated; this heat, on the one hand, may result in a rapid reduction in the cutting efficiency of the tool (with a resultant need for replacement and increase in the machining downtime) and, on the other hand, may cause deterioration of the resin (which may be carbonized) and even of the fibres, so that ultimately a significant percentage of articles may be damaged and therefore discarded.

In the field of machine-tools with swarf removal used for machining metallic materials, methods are known where the machining tool is cooled by means of a coolant which usually contains oily substances, in particular mineral and vegetable oils, so that, during the cutting action, a lubricating effect is also combined with the cooling effect in the zone of contact between tool and material, while, during operation of the machine, the use of these oily substances protects the structure thereof and the more sophisticated and costly components, such as the electric chuck, the tool-carrying noses and the tools themselves, from being rapidly oxidized and therefore deteriorated. The deterioration of these components would in fact result in a rapid reduction in the precision of the machining operations and consequently in frequent and expensive repair/replacement of the deteriorated parts.

Also kown are machining attachments, such as those described by the International Patent Application WO 03/103888, which claims a drilling attachment. Said device is provided with conduits where, in case of wet drilling operations, a fluid like water can pass through, in order to reach the point of contact between the cutting member connected to said attachment and the piece to be drilled.

These methods could therefore be used in the machining of fibrous articles to which the present invention relates. However, even if cooling were to have positive effects, solving the problem of heating of the tool resulting from the abovementioned high degree of abrasiveness of the materials forming the fibrous panels, the oily constituents of the coolant could dissolve the bonding resins, such that the properties of the panels, and in particular their mechanical strength, would be negatively affected.

For this reason the use of oily liquids during the machining of the panels in question has actually not been and still is not taken into account.

It also worth mentioning that in the machining of metallic materials with swarf removal the problem of dust and fine particles has not existed and still does not exist.

It has now been discovered, and this forms the main object of the present invention, that if, in connection with the machining of articles, in particular panels, made of fibres of inert materials and hardening resins, the machining tool is sprayed with water containing non-oily substances which assist cutting and do not have a harmful effect on the aforementioned hardening resins, the problem of the dust and fine particles is fully solved in an industrially advantageous manner.

In order to implement this method, the materials of which are made the components of the machine-tool coming into contact with the water and their construction must be conveniently selected, in order to prevent their oxidization which would prevent a proper operation of the system. Moreover, special hermetic protective screens must be used to prevent the water from being able to damage the delicate components, which in any case are preferably housed in the upper zone of the machine structure, and the water flow obviously is preferably directed downwards.

Other not negligible advantages, described in the remainder of this description, are obtained thanks to the present invention.

The accompanying drawings show in schematic form some technical solutions according to the present invention relating to machining where boring is performed, it being understood that this is a non-limiting example.

This will emerge clearly from the following description of non-limiting example of the embodiments illustrated in the accompanying drawings, in which :
- Fig. 1 is a schematic side view of a machining head part according to a first implementation of the method of the invention;
- Fig. 2 is a schematic side view of a machining head part according to a second implementation of the method of the invention;
- Fig. 3 shows a machining head forming a channel in tha article to be worked;
- Fig. 4 and 5 show examples of machining operations carried out on the side edge and at an inner corner of an article.

With reference to the above-mentioned figures, a machining head,generally designated by the reference numeral 10, comprises a boring or milling tool 14 which machines a panel 12 of the above mentioned type.

In a *per se* known manner, the head 10 has a distribution coupling rotating at high speed and a channel for supplying a liquid which, in the present case, is water and which flows out through an axial hole provided inside the tool 14. The water forms a film surrounding the tool and rises up inside said hole while retaining all the minute particles which are formed by the action of the tool.

In this way, moreover, the cooling action is produced in a localized manner, namely where heat is generated by the friction between the tool and the hard abrasive material (fibres embedded in a resin) of which the panel 12 is made.

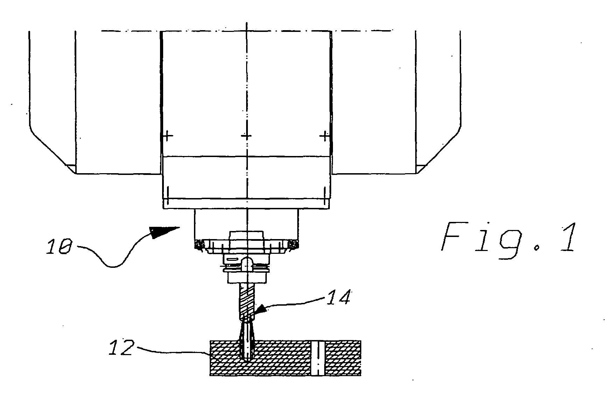

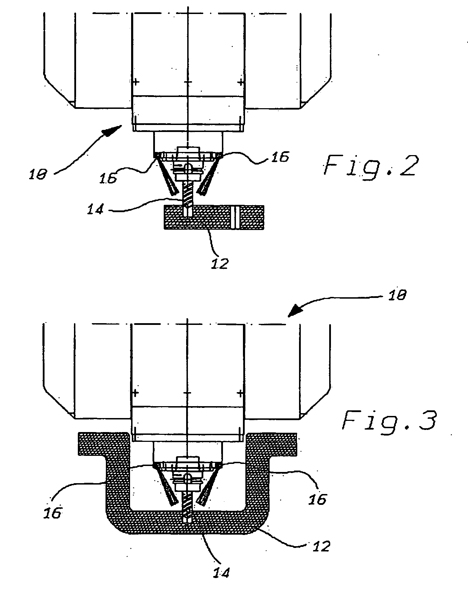

In the embodiment according to Fig. 2 the same machining operation as in Fig. 1 is illustrated (so that parts identical or corresponding to those in Fig. 1 are indicated by the same reference numerals) with the difference that the water is supplied by nozzles 16 arranged outside the tool 14 even though in the proximity of the tool. In this case the action blocking the fine particles is as effective as the cooling action since the liquid supplied by the nozzles 16 affects, in addition to the tool, also a larger area of the panel 12 being machined.

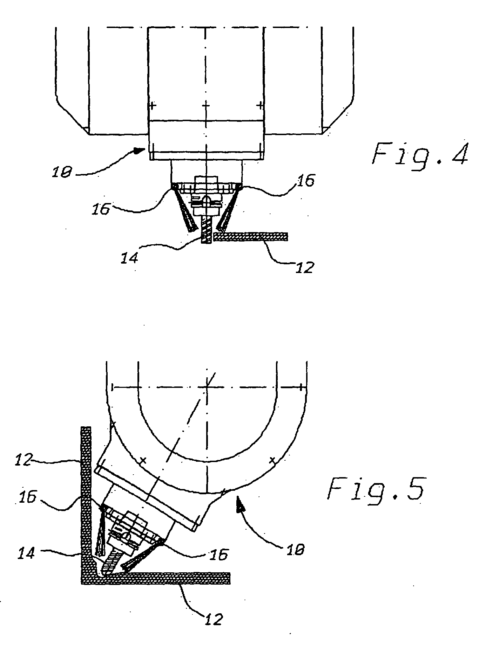

It is remarkable that, in the examples shown in Figures 3 and 5, the conventional suction systems of the particles would be particularly ineffective and the above mentioned technical problem not solved.

As already mentioned above, the liquid used to block the particles and dust as well as for cooling is water, which is generally supplied under a pressure of between 5 and 10 bar, even if higher pressures cannot to be excluded in the case, for example, of deep holes, and at a flowrate of between 10 and 20 litres/minute when the water is supplied through the axial hole of the tool and of between 20 and 40 litres/minute when the water is supplied outside the tool. The flowrates are variable depending on the diameter of the tool and the type of machining operation. To the water are added compounds which assist the cutting action of the tool. These compounds are free of, and cannot be mixed/emulsified with, any type of vegetal, mineral or animal oil nor with solvents and chlorine which may have an aggressive action both on the resins and on the fibres. These compounds are, moreover, completely biodegradable and do not pose any danger while used or handled, while maintaining a cooling and lubricating effect during the cutting action and non-oxidizing effect on the machine parts with which they come into contact.

Additives of this kind which also have a lubricating function are known, such as the product which is commercially distributed under the name of SKV 02 by Agesa Handels GmbH and has chemical composition consisting for example of methyloxy azolidine, benzotriazole, amino-ethanol and propylbutyl carbomate.

The water used during the machining operations is collected and clarified in order to eliminate the suspended particles and preferably reused.

Summarizing the advantages achieved by the present invention, the following comments must be made:
(1) during machining the dust and fine particles are substantially eliminated, avoiding the use of an expensive suction equipment and avoiding environmental pollution as well as health problems to the workers;
(2) dust is also eliminated when articles having a concave and convex shape, also with a small radius of curvature, are machined;
(3) a more effective cooling in the zone of contact between a tool and an article being machined results in an increase in productivity owing to the possibility of increasing the feeding speed of the tool and/or the speed of rotation of the chuck without increasing the danger of overheating and therefore of damaging the materials of which the articles are made;
(4) a more effective cooling in the zone of contact between a tool and an article being machined in combination with a possible lubricating action (when additives of the above mentioned type added to the water) results in an increased working life of the tools with a consequent economic advantage in view of their high cost and the fact that they are normally coated with sintered diamonds. Alternatively, the invention makes possible the use of more conventional tools, for example made of hard fine-grain metal, which are less expensive.

The invention has now been described in relation to a preferred embodiment but it is understood that, within the scope of the following claims, modifications and variants which are conceptually and mechanically equivalent are possible.

## Claims

1. A method for the machining with a machine tool with swarf removal of an solid article (12) or panel made of a material consisting of fibrous material embedded into a hardened synthetic resin, wherein the zone of contact between the machine tool (14) and the article (12) or panel being machined is sprayed with a mixture consisting of water and a lubricating and cooling composition, **characterized in that** said composition is free of any type of vegetal, mineral or animal oil, of solvents and of chlorine, is biodegradable and comprises in combination methyloxy azolidine, benzotriazole, aminoethanol, propylbutyl carbonate.

2. A method according to Claim 1, **characterized in that** the fibrous material is selected from glass, carbon, aramide and similar fibres and the bonding agents are hardening resins, in particular epoxy resin.

3. A method according to Claim 1, **characterized in that** said water is supplied along a channel formed in the chuck and inside the said tool (14).

4. A method according to Claim 1, **characterized in that** said water is supplied to nozzles (16) positioned outside said tool (14) so as to be sprayed in the zone of contact between the said tool (14) and said article (12).

## Patentansprüche

1. Ein Verfahren zur Bearbeitung mit einer Werkzeugmaschine mit Spanentfernung von einem festen Gegenstand (12) oder einer Platte, hergestellt aus einem Material, das aus einem in ein härtendes Kunstharz eingebettetem Fasermaterial besteht, wobei der Kontaktbereich zwischen der Werkzeugmaschine (14) und dem Gegenstand (12) oder der Platte, der/die bearbeitet werden, mit einer aus Wasser und einer Schmier- und Kühlzusammensetzung bestehenden Mischung besprüht wird, **dadurch gekennzeichnet, dass** die Zusammensetzung frei von irgendwelchen Arten von vegetativen, mineralischen oder tierischen Ölen, Lösungsmitteln und Chlor ist, bioabbaubar ist und Methyloxyazolidin, Benzotriazol, Aminoethanol, Propylbutylcarbonat in Kombination umfasst.

2. Verfahren gemäß Anspruch 1, **dadurch gekennzeichnet, dass** das Fasermaterial aus Glas-, Kohle-, Aramid- und ähnlichen Fasern ausgewählt ist und die Bondierungsmittel härtende Harze, insbesondere Epoxidharze sind.

3. Verfahren gemäß Anspruch 1, **dadurch gekennzeichnet, dass** das Wasser entlang eines im Futter und innerhalb des Werkzeugs (14) gebildeten Kanals zugeführt wird.

4. Verfahren gemäß Anspruch 1, **dadurch gekennzeichnet, dass** das Wasser zu außerhalb des Werkzeugs (14) lokalisierten Düsen (16) zugeführt wird, um in den Kontaktbereich zwischen dem besagten Werkzeug (14) und besagtem Gegenstand (12) gesprüht zu werden.

## Revendications

1. Procédé d'usinage, par enlèvement de copeaux au moyen d'une machine-outil, d'un article (12) ou d'un panneau solide fabriqué en un matériau consistant en une matière fibreuse noyée dans une résine synthétique durcie, dans lequel la zone de contact entre la machine-outil (14) et l'article (12) ou le panneau usiné est couverte par pulvérisation d'un mélange consistant en eau et un composé lubrifiant et réfrigérant, **caractérisé en ce que** ledit composé est dépourvu de tout type d'huile végétale, minérale ou animale, de solvant et de chlore, est biodégradable et comporte en combinaison : methyloxyazolidine, benzotriazole, aminoéthanol, carbonate de propyle et de butyle.

2. Procédé selon la revendication 1, **caractérisé en ce que** la matière fibreuse est choisie parmi : verre, charbon, aramide et fibres similaires et les agents liants sont des résines durcissantes, notamment un résine époxy.

3. Procédé selon la revendication 1, **caractérisé en ce que** ladite eau est acheminée par un canal formé dans le porte outils et à l'intérieur dudit outil (14).

4. Procédé selon la revendication 1, **caractérisé en ce que** ladite eau est amenée à des buses (16) situées à l'extérieur dudit outil (14) de façon à être pulvérisée dans la zone de contact entre ledit outil (14) et ledit article (12).
